# EUROPEAN PATENT APPLICATION

(11) **EP 4 443 625 A1**
(43) Date of publication of application: **09.10.2024**
(21) Application number: 23737067.1
(22) Date of filing: 04.01.2023
(51) Int. Cl.: H01M 50/289, H01M 50/249, H01M 50/242

(54) **BATTERY AND ELECTRIC DEVICE**

(30) Priority: 04.01.2022 CN 202210004897
(71) Applicant: Contemporary Amperex Technology (Hong Kong) Limited, Central, Central And Western District (HK)
(72) Inventor: ZHEN, Xiaofeng, Ningde, Fujian 352100 (CN); LIN, Mingfeng, Ningde, Fujian 352100 (CN); CHEN, Bing, Ningde, Fujian 352100 (CN); HUANG, Yuping, Ningde, Fujian 352100 (CN); SHEN, Yidong, Ningde, Fujian 352100 (CN); LI, Zhiling, Ningde, Fujian 352100 (CN); ZHAO, Haikun, Ningde, Fujian 352100 (CN); WANG, Bangyong, Ningde, Fujian 352100 (CN)
(74) Representative: von Tietzen und Hennig, Nikolaus
(86) International application number: PCT/CN2023/070504
(87) International publication number: WO 2023/131204

(57) **Abstract**

This application relates to the field of new energy technologies, and specifically, to a battery and an electric apparatus. The battery includes a plurality of arranged battery cells; and a pressure regulating apparatus, including a body portion and a regulating valve, where the body portion is arranged between adjacent battery cells, a gas pipeline being formed in the body portion, and the regulating valve is arranged in the gas pipeline and configured to regulate pressure in the gas pipeline so as to adjust a gap between adjacent battery cells. In this way, this application can improve the cycling performance and service life of the battery.

## Description

### CROSS-REFERENCE TO RELATED APPLICATIONS

This application refers to China Patent Application No. 202210004897.X, filed on Jan. 4, 2022 and entitled "BATTERY AND ELECTRIC APPARATUS", which is incorporated by reference in its entirety.

### TECHNICAL FIELD

This application relates to the field of new energy technologies, and specifically, to a battery and an electric apparatus.

### BACKGROUND

With the rapid development of the new energy sector, the application of batteries is becoming increasingly widespread. A battery generally consists of a plurality of battery cells arranged and assembled together. During the operation of the battery cells, the battery cells may swell due to factors such as the generation of gas inside the battery cells.

In the process of battery assembly, to prevent the structural interference between adjacent battery cells and damage to the overall battery structure caused by battery cell swelling, it is necessary to reserve a gap between adjacent battery cells for the swelling of battery cells. However, reserving a gap leaves the battery cells in a state of free swelling in the initial state, significantly affecting the service life of the battery.

### SUMMARY

In view of the foregoing problem, this application provides a battery and an electric apparatus, so as to improve the cycling performance and service life of the battery.

According to one aspect of this application, a battery is provided, including a plurality of arranged battery cells; and a pressure regulating apparatus, including a body portion and a regulating valve, where the body portion is arranged between adjacent battery cells, a gas pipeline being formed in the body portion, and the regulating valve is arranged in the gas pipeline and configured to regulate pressure in the gas pipeline so as to adjust a gap between adjacent battery cells.

The pressure regulating apparatus is arranged between the battery cells, and the pressure in the gas pipeline in the body portion of the pressure regulating apparatus is adjusted, enabling the body portion to provide a pre-tension force to the battery cells, that is, to provide a certain restraining force to the electrode plates, so as to suppress the free swelling of the battery cells and prevent the occurrence of wrinkling in the electrode plates, thus improving the cycling performance and service life of the battery cells.

In some embodiments, the regulating valve includes a pressure booster valve, and the pressure booster valve is configured to connect to a gas source device to increase the pressure in the gas pipeline when the pressure booster valve is actuated. With the pressure booster valve provided, the pressure booster valve is configured to connect to a gas source device to increase the pressure in the gas pipeline in the body portion, thus increasing the restraining force of the body portion on the battery cells and reducing the gap between the battery cells.

In some embodiments, inert gas circulates in the gas pipeline. With the inert gas provided as the gas circulating in the gas pipeline, in the event of high-temperature thermal runaway of the battery, if the body portion melts at high temperatures, the inert gas is released. This can reduce the contact between flammable materials and oxygen, helping prevent combustion or, in the case of ongoing combustion, control the fire, thus enhancing the safety performance of the battery.

In some embodiments, a weak layer is provided on the body portion at a position corresponding to the gas pipeline, and when broken, the weak layer is used for the inert gas to flow out. With the selection of a material for the weak layer that maintains a good shape within the normal working temperature range of the battery but softens and melts when the battery experiences thermal runaway beyond the normal temperature, the rupture of the material facilitates release of the internal inert gas.

In some embodiments, the regulating valve includes a pressure relief valve, where the pressure relief valve is configured to reduce the pressure in the gas pipeline when actuated. With the provision of the pressure relief valve, gas in the gas pipeline can be controlled to discharge so as to reduce the restraining force of the body portion on the battery cells. This allows for a certain degree of swelling of the battery cells, thereby decreasing the gap between adjacent battery cells. This not only prevents wrinkling of the electrode plates but also ensures the stability of the overall structure of the battery.

In some embodiments, the body portion includes a pipe wound between a plurality of adjacent battery cells. With the body portion provided as a pipe, the structural layout between battery cells can be optimized, allowing the space between adjacent battery cells, excluding the pipe, to achieve heat conduction through air circulation or the use of water-cooling pipes. This facilitates the rapid dissipation of heat between battery cells, providing favorable temperature conditions for the battery.

In some embodiments, the pipe is wound on a side wall of the battery cell, and the side wall of the battery cell includes a first side wall and a second side wall adjacent to each other, and area of the first side wall is larger than area of the second side wall, and a laying region of the pipe on the first side wall is symmetrically distributed. When the battery cell swells and bulges, the degree of bulging is greatest on the first side wall. Distributing the laying region of the pipe symmetrically on the first side wall ensures even distribution of the force applied by the pipe on the first side wall, thereby ensuring the stability of the overall structure of the battery.

In some embodiments, the laying region of the pipe on the first side wall includes a plurality of portions, and the plurality of portions of the laying region are located on two sides of a center line of the first side wall. When the battery cell swells and bulges, the degree of bulging is greatest in the central region of the first side wall. With the laying region of the pipe on the first side wall divided into a plurality of portions, and the plurality of laying portions distributed on two sides of the center line of the first side wall, the force distribution of the pipe on the first side wall is kept uniform. This arrangement leaves the central region of the first side wall empty, avoiding the structural stability of the battery being affected by excessive interaction forces between the swollen central region of the first side wall and the pipe. Additionally, this ensures that the central region of the first side wall has a larger space for swelling.

In some embodiments, the body portion includes a plurality of air cushions arranged between adjacent battery cells. A gas pipeline is formed in the air cushion, and the restraining force on the battery cells and the gap between adjacent battery cells can be adjusted by increasing or decreasing the pressure in the gas pipeline.

In some embodiments, a pressure sensor is provided in the gas pipeline. The pressure sensor is provided in the gas pipeline to monitor the value of pressure in the gas pipeline, facilitating the adjustment of the pressure in the gas pipeline. This provides appropriate pre-tension force for the battery cells on one hand, and allows for a certain degree of swelling of the battery cells on the other hand.

According to another aspect of this application, an electric apparatus is provided, including the battery according to any one of the foregoing embodiments.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, like parts are denoted by like reference symbols throughout the drawings. To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts. In the accompanying drawings:
FIG. 1 is a schematic structural diagram of a vehicle according to an embodiment of this application;
FIG. 2 is an exploded view of a battery according to an embodiment of this application;
FIG. 3 is an exploded view of a battery cell according to an embodiment of this application;
FIG. 4 is a schematic structural diagram of a battery according to an embodiment of this application;
FIG. 5 is a sectional structural view of adjacent battery cells and a body portion in a battery according to an embodiment of this application;
FIG. 6 is a schematic structural diagram of a first side wall and a pipe of a battery cell in a battery according to an embodiment of this application; and
FIG. 7 is a schematic structural diagram of a battery according to another embodiment of this application;

Reference signs in specific embodiments are as follows:
vehicle 1000;
battery 100, controller 200, motor 300;
box 10, first portion 11, second portion 12;
battery cell 20, end cover 21, electrode terminal 21a, housing 22, electrode assembly 23, tab 23a, first side wall 24, center line 241, second side wall 25;
pressure regulating apparatus 30, body portion 31, gas pipeline 311, gas inlet 312, gas outlet 313, weak layer 314, regulating valve 32, pressure booster valve 321, pressure relief valve 322, pipe 33, laying region 331, air cushion 34, and pressure sensor 35.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, from a perspective of market development, application of batteries is becoming more and more extensive. Batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With the continuous expansion of application fields of batteries, market demands for the batteries are also expanding.

Batteries are generally formed by a plurality of battery cells arranged and assembled within a battery box. Due to the swelling of graphite or the generation of gas within the electrode assembly of the battery cells during the charge and discharge processes, the battery cells will bulge and swell.

To avoid structural interference between adjacent battery cells caused by bulging and swelling of the battery cells, during battery assembly, a certain gap is usually reserved between adjacent battery cells, providing space for the swelling of the battery cells.

However, reserving a certain gap between adj acent battery cells leads to free swelling of the battery cells in the initial state due to the lack of external constraints. The electrode assembly within the battery cells is enclosed by a separator, and the free swelling of the electrode assembly is constrained by the separator, resulting in wrinkling of the electrode plates in the electrode assembly. This, in turn, leads to lithium precipitation, causing deterioration in the cycling performance of the battery and a significant reduction in the service life of the battery.

To address the foregoing problem, some batteries have cushions sandwiched between adjacent battery cells during the assembly process. These cushions are typically made of a soft rubber material with a certain elasticity, providing a certain level of restriction to the swelling of battery cells. When a battery cell swells, it compresses the cushion, causing the cushion to deform. The cushion restricts the swelling of the battery cell through a restoring force caused by its elastic deformation.

However, the applicant of this application has noticed that the cushion has a poor ability to restrict the swelling of the battery cell. Moreover, after prolonged deformation due to the swelling force, the deformation becomes irreversible, rendering the cushion unable to provide further swelling restriction to the battery cell. This also leads to a decline in the cycling performance of the battery and adversely affects the service life of the battery.

In view of this, this application proposes a battery, where a pressure regulating apparatus is provided between a plurality of arranged battery cells. The pressure regulating apparatus includes a body portion and a regulating valve. The body portion is arranged between adjacent battery cells, with a gas pipeline formed inside. Through adjustment of the pressure in the gas pipeline by using the regulating valve, the force exerted by the body portion on adjacent battery cells can be adjusted, allowing for adjustment of the gap size between adjacent battery cells. This provides effective restraining force to the electrode assembly within the battery cells to prevent wrinkling of the electrode plates in the electrode assembly. This also effectively avoids the battery cells being in a state of free swelling while ensuring that the battery cells have sufficient swelling space, thus improving the cycling performance and service life of the battery.

The battery disclosed in the embodiments of this application may be used without limitation in electric apparatuses such as vehicles, ships, or aircrafts.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

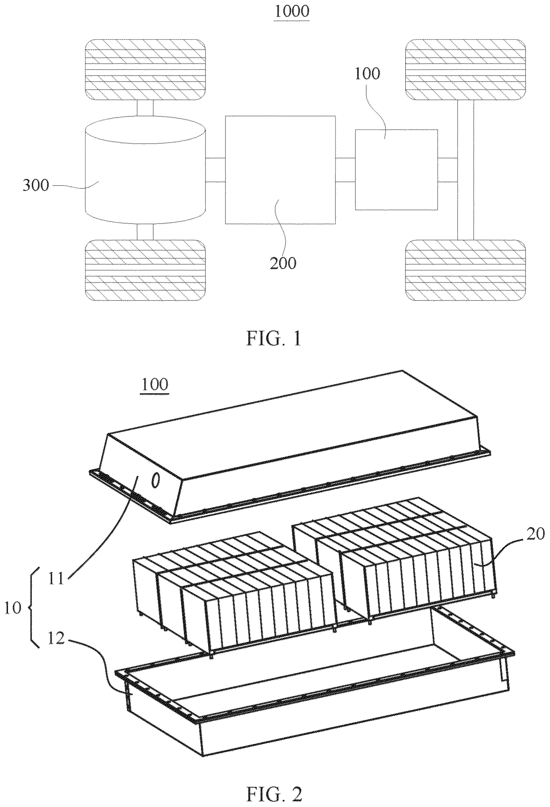

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Refer to FIG. 2. FIG. 2 is an exploded view of the battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together so that the first portion 11 and the second portion 12 jointly define a space for accommodating the battery cell 20. The second portion 12 may be a hollow structure with one end open, and the first portion 11 may be a plate structure. The first portion 11 covers the open end of the second portion 12, so that the first portion 11 and the second portion 12 jointly define an accommodating space. Alternatively, both the first portion 11 and the second portion 12 may be a hollow structure with one end open, and the open end of the first portion 11 covers the open end of the second portion 12. The box 10 formed by the first portion 11 and the second portion 12 may be in various shapes, for example, cylinder or cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

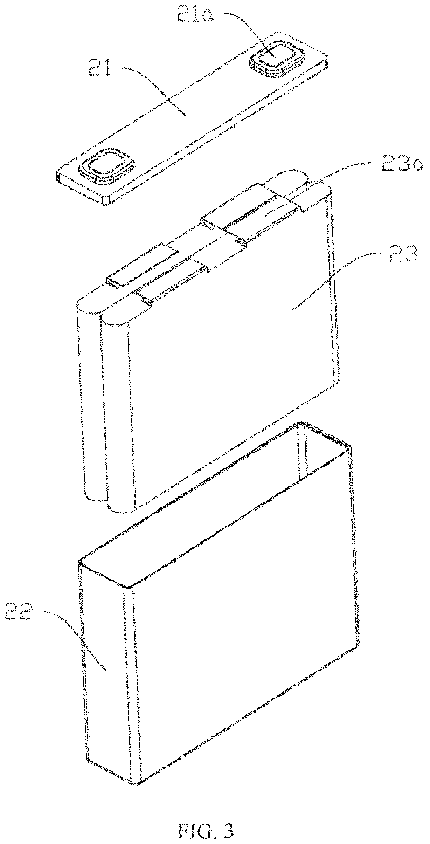

Referring to FIG. 3, FIG. 3 is a schematic structural exploded view of a battery cell 20 in a battery 100 according to some embodiments of this application. The battery cell 20 is a smallest unit constituting a battery. As shown in FIG. 3, the battery cell 20 includes an end cover 21, a housing 22, an electrode assembly 23, and other functional components.

The end cover 21 is a component that covers an opening of the housing 22 to isolate the internal environment of the battery cell 20 from an external environment. A shape of the end cover 21 is not limited and may be adapted to a shape of the housing 22 to fit the housing 22. In some embodiments, the end cover 21 may be made of a material with given hardness and strength (for example, aluminum alloy), so that the end cover 21 is less likely to deform when subjected to extrusion and collision, allowing the battery cell 20 to have higher structural strength and enhanced safety performance. Functional components such as an electrode terminal 21a may be provided on the end cover 21. The electrode terminal 21a may be configured to be electrically connected to the electrode assembly 23 for outputting or inputting electric energy of the battery cell 20. In some embodiments, the end cover 21 may further be provided with a pressure relief mechanism for releasing internal pressure when the internal pressure or a temperature of the battery cell 20 reaches a threshold. The end cover 21 may also be made of various materials, such as copper, iron, aluminum, stainless steel, aluminum alloy, and plastic, which are not particularly limited in the embodiments of this application. In some embodiments, an insulator may also be provided at an inner side of the end cover 21. The insulator may be configured to isolate an electrically connected component in the housing 22 from the end cover 21 to reduce the risk of short circuit. For example, the insulator may be made of plastic, a rubber, or the like.

The housing 22 is an assembly configured to form an internal environment of the battery cell 20 together with the end cover 21, where the formed internal environment may be configured to accommodate the electrode assembly 23, an electrolyte, and other components. The housing 22 and the end cover 21 may be separate components, an opening may be provided on the housing 22, and the end cover 21 covers the opening to form the internal environment of the battery cell 20. Without limitation, the end cover 21 and the housing 22 may be integrated. The housing 22 may be of various shapes and sizes, such as a rectangular shape, a cylindrical shape, and a hexagonal prism shape. Specifically, a shape of the housing 22 may be determined according to a specific shape and size of the electrode assembly 23. The housing 22 may be made of various materials, such as copper, iron, aluminum, stainless steel, aluminum alloy, and plastic, which are not particularly limited in the embodiments of this application.

The electrode assembly 23 is a component in which electrochemical reactions occur in the battery cell 20. The housing 22 may include one or more electrode assemblies 23. The electrode assembly 23 is mainly formed by winding or stacking a positive-electrode plate and a negative-electrode plate, and a separator is generally disposed between the positive-electrode plate and the negative-electrode plate. Parts of the positive-electrode plate and the negative-electrode plate with active substances constitute a body portion of the electrode assembly, while parts of the positive-electrode plate and the negative-electrode plate without active substances each constitute a tab 23a. A positive electrode tab and a negative electrode tab may both be located at one end of the body portion or be located at two ends of the body portion respectively. During the charge and discharge processes of the battery, a positive electrode active substance and a negative electrode active substance react with an electrolyte, and the tabs 23a are connected to electrode terminals to form a current loop.

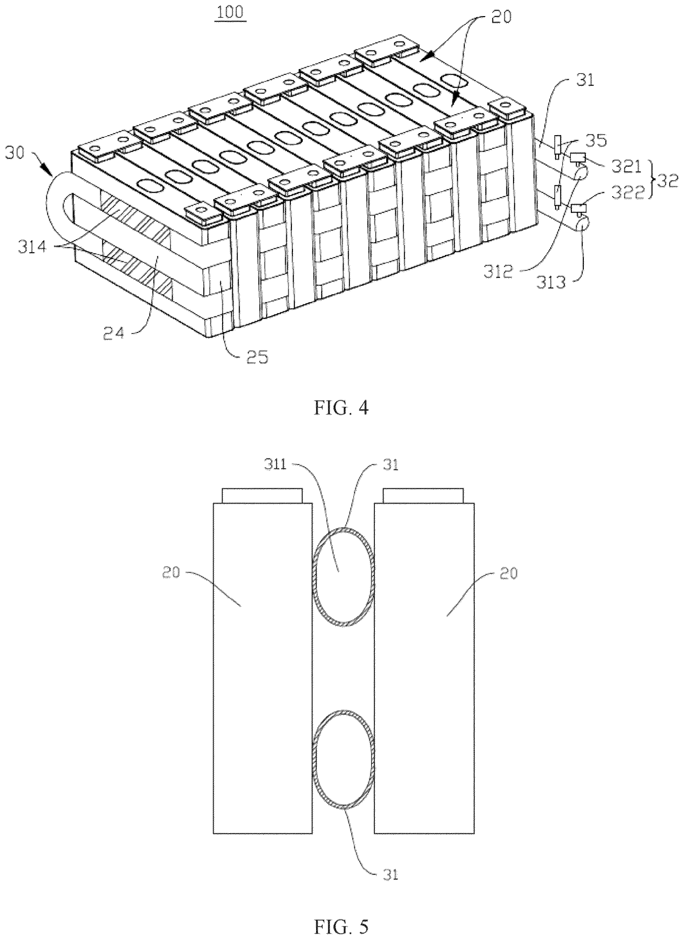

According to an aspect of an embodiment of this application, a battery is provided. For details, refer to FIGs. 4 and 5. FIG. 4 shows a structure of a battery 100 according to an embodiment of this application. FIG. 5 shows a cross-sectional structure of two adjacent battery cells 20 and the body portion 31 in between in the battery 100. The battery 100 includes: a pressure regulating apparatus 30 and a plurality of arranged battery cells 20. The pressure regulating apparatus 30 includes a body portion 31 and a regulating valve 32, where a gas pipeline 311 is formed in the body portion 31, and the regulating valve 32 is arranged in the gas pipeline 311 and configured to regulate pressure in the gas pipeline 311 so as to adjust a gap between adjacent battery cells 20.

The body portion 31 may be a pipe structure shown in FIG. 5 or an inflatable cushion structure. An air pipeline 311 for the inflow and outflow of air is formed in the body portion 31. When not restricted by battery cells 20 on two sides, after the body portion 31 is inflated and fully expanded, a cross-section of the internal gas pipeline 311 may be circular, elliptical, polygonal, or irregular arc-shaped, depending on a shape of a surface of a battery cell 20 in abutment and the desired range of gap size adjustment. This is not limited herein. To prevent the body portion 31 from falling from the gap between the battery cells 20 when the pressure inside the body portion 31 decreases, both sides of the body portion 31 can be fixed to the battery cells 20 by gluing.

The regulating valve 32 may be a manual valve or an automatic valve, and the regulating valve 32 may be a one-way valve or a two-way valve. When the regulating valve 32 is a one-way valve, a regulating valve 32 can be provided at each end of the gas pipeline 311, one for controlling the intake and the other for controlling the exhaust. When the regulating valve 32 is a two-way valve, the body portion 31 at one end of the gas pipeline 311 can be closed, and the regulating valve 32 controls both the intake and the exhaust.

The body portion 31 may be wound in a double-layer reciprocating manner between the battery cells 20, as shown in FIG. 4, or it may be wound in one-layer manner. To ensure the uniform distribution of the force exerted by the pressure regulating apparatus 30 on the battery cell 20, in some embodiments, no matter whether the body portion 31 is wound in a single layer or multiple layers between the battery cells 20, the body portion 31 is symmetrically distributed along the center line of the battery cell 20.

As shown in FIG. 4, the body portion 31 has a gas inlet 312 and a gas outlet 313 that communicate with the gas pipeline 311. It can be understood that in other embodiments, the gas inlet 312 and gas outlet 313 may be a same opening. The regulating valve 32 is disposed at the gas inlet 312 and the gas outlet 313, to control the flow of gas into or out of the gas pipeline 311 so as to adjust the force exerted by the body portion 31 on the battery cell 20. Specifically, as shown in FIG. 5, when the gas is controlled to flow into the gas pipeline 311 to increase the internal pressure, the body portion 31 exerts a greater force on the battery cells 20 at both sides and the swelling structures of the battery cells 20 contract, increasing the gap between the adjacent battery cells 20; and when the gas is controlled to flow out of the gas pipeline 311 to reduce the internal pressure, the body portion 31 exerts a smaller force on the battery cells 20 at both sides and the battery cells 20 swell and bulge, reducing the gap between adjacent battery cells 20.

The electrode assembly 23 in the battery cells 20 is formed by stacking or winding electrode plates, wrapped with a separator outside. During the charge and discharge processes, the graphite on the electrode plates undergoes irreversible swelling. If the electrode plates are in a state of free swelling, the restraint by the separator leads to wrinkling of the electrode plates. Lithium precipitation may occur at the wrinkled regions of the electrode plates, affecting the service life of the battery 100.

In the initial state after the battery 100 is assembled, pressure in the gas pipeline 311 of the body portion 31 is adjusted to an appropriate value. This provides an appropriate pre-tension force to the battery cells 20 to prevent wrinkling of the electrode plates. As the usage duration of the battery 100 increases, the battery cells 20 swell and exert certain pressure on the body portion 31. As the swelling degree of the battery cells 20 increases, the excessive stress between the battery cells 20 and the body portion 31 will lead to structural damage of the entire battery 100. To avoid this situation, it is necessary to appropriately reduce the pressure within the gas pipeline 311 of the body portion 31. This allows for a certain degree of swelling of the battery cells 20, facilitating adjustment of the gap between adjacent battery cells 20. This not only helps ensure the stability of the overall structure of the battery 100 but also maintains the restriction on the swelling of the battery cells 20.

The pressure regulating apparatus 30 is arranged between the battery cells 20, and the pressure in the gas pipeline 311 in the body portion 31 of the pressure regulating apparatus 30 is adjusted, enabling the body portion 31 to provide a pre-tension force to the battery cells 20, that is, to provide a certain restraining force to the electrode plates, so as to suppress the free swelling of the battery cells 20, and prevent the occurrence of wrinkling in the electrode plates, thus improving the cycling performance and service life of the battery cells.

Still referring to FIG. 4, according to some embodiments of this application, the regulating valve 32 includes a pressure booster valve 321, and the pressure booster valve 321 is configured to connect to a gas source device to increase the pressure in the gas pipeline 311 when the pressure booster valve 321 is actuated.

The gas source device refers to a device that communicates with the gas pipeline 311 and delivers gas into the gas pipeline 311, which may be, for example, a fan, a compressor, or a vacuum pump. The gas source device is generally provided on the electric apparatus using the battery 100, and the gas delivery port of the gas source device communicates with the gas pipeline 311.

The pressure booster valve 321 being connected to the gas source device may be the pressure booster valve 321 being connected at the gas delivery port of the gas source device to control the opening or closing of the gas delivery port, or may be the pressure booster valve 321 being connected at the gas inlet 312 of the body portion 31 to control the opening or closing of the gas inlet 312, so as to indirectly control the opening or closing of the channel through which the gas delivery port of the gas source device delivers gas to the gas pipeline 311.

With the pressure booster valve 321 provided, the pressure booster valve 321 is configured to connect to a gas source device to increase the pressure in the gas pipeline 311 in the body portion 31, thus increasing the restraining force of the body portion 31 on the battery cells 20 and reducing the gap between the battery cells 20.

According to some embodiments of this application, inert gas circulates in the gas pipeline 311.

Specifically, the pressure booster valve 321 may be connected to a gas source device that provides an inert gas, so that the inert gas can be delivered into the gas pipeline 311.

With the inert gas provided as the gas circulating in the gas pipeline 311, in the event of high-temperature thermal runaway of the battery 100, if the body portion 31 melts at high temperatures, the inert gas is released. This can reduce the contact between flammable materials and oxygen, helping prevent combustion or, in the case of ongoing combustion, control the fire, thus enhancing the safety performance of the battery 100.

Still referring to FIG. 4, according to some embodiments of this application, in some embodiments, a weak layer 314 is provided on the body portion 31 at a position corresponding to the gas pipeline 311, and when broken, the weak layer 314 is used for the inert gas to flow out.

With the selection of a material for the weak layer 314 that maintains a good shape within the normal working temperature range of the battery 100 but softens, melts, and ruptures when the battery 100 experiences thermal runaway beyond the normal temperature, the release of the internal inert gas is implemented.

Specifically, for some batteries 100 operating at temperatures below 50°C, the weak layer 314 may be made of polyethylene material. At 50°C and below, the polyethylene material maintains its normal form. However, when the temperature inside the battery 100 exceeds 50°C and thermal runaway occurs, the polyethylene material melts and ruptures. This rupture allows the release of inert gas from the gas pipeline 311, preventing combustion or, in the case of ongoing combustion, controlling the fire. Similarly, for batteries 100 operating at temperatures below 130°C, the weak layer 314 may be made of natural rubber material. For batteries 100 operating at temperatures below 220°C, the weak layer 314 may be made of polystyrene material.

It should be understood that the material choices mentioned above for the weak layer 314 are just some preferred options and does not serve as limitations on the material for the weak layer 314. In other embodiments, the material for the weak layer 314 can be selected based on the actual operating temperature range of the battery 100 to achieve control in the case of thermal runaway of the battery 100.

It should be understood that the weak layer 314 may be arranged at a position between two adjacent battery cells 20 on the body portion 31 as shown in FIG. 4, so that the inert gas can quickly reach the battery cells 20 when the weak layer 314 ruptures. Certainly, the weak layer 314 may alternatively be arranged at other locations on the body portion 31. This is not limited herein.

In FIG. 4, the region filled with diagonal lines is solely used to indicate the location of the weak layer 314 and does not represent the specific shape and structure of the body portion 31. In the specific structure of the body portion 31, the weak layer 314 may either be configured as having distinct shapes, colors, or structures from other parts of the body portion 31, or the weak layer 314 may be configured as being indistinguishable from other parts of the body portion 31, except for the material.

In some other embodiments of this application, the body portion 31 may be integrally configured as an integrated weak layer 314, such that the inert gas can be fully and quickly released when thermal runaway occurs in the battery 100.

With the weak layer 314 disposed at a position on the body portion 31 corresponding to the gas pipeline 311, when the battery 100 experiences thermal runaway beyond the normal temperature, the weak layer 314 melts and ruptures. This allows for release of inert gas from the gas pipeline 311, preventing combustion or, in the case of ongoing combustion, controlling the fire, thereby enhancing the safety performance of the battery 100.

Still refer to FIG. 4, according to some embodiments of this application, the regulating valve 32 includes a pressure relief valve 322, where the pressure relief valve 322 is configured to reduce the pressure in the gas pipeline 311 when actuated.

Specifically, the pressure relief valve 322 is arranged at the gas outlet 313 of the body portion 31 to control the opening or closing of the gas outlet 313.

With the provision of the pressure relief valve 322, gas in the gas pipeline 311 can be controlled to discharge so as to reduce the restraining force of the body portion 31 on the battery cells 20. This allows for a certain degree of swelling of the battery cells 20, thereby decreasing the gap between adjacent battery cells 20. This not only prevents wrinkling of the electrode plates but also ensures the stability of the overall structural of the battery 100.

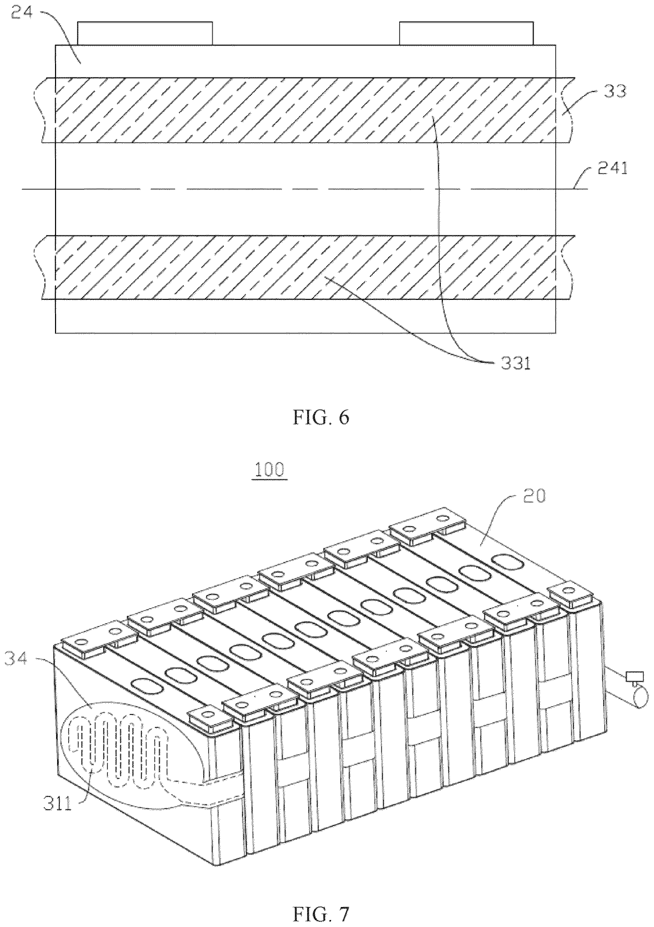

Still refer to FIG. 4, with further reference to FIG. 6. FIG. 6 is a structure of a pipe 33 connecting to a side wall of a battery cell 20 in a battery 100 according to an embodiment of this application. According to some embodiments of this application, the body portion 31 includes a pipe 33 wound between a plurality of adjacent battery cells 20.

With the body portion 31 provided as a pipe 33, the structural layout between battery cells 20 can be optimized, allowing the space between adjacent battery cells 20, excluding the pipe 33, to achieve heat conduction through air circulation or the use of water-cooling pipes. This facilitates the rapid dissipation of heat between battery cells 20, providing favorable temperature conditions for the battery 100.

Still refer to FIGs. 4 and 6. According to some embodiments of this application, the pipe 33 is wound on a side wall of the battery cell 20, and the side wall of the battery cell 20 includes a first side wall 24 and a second side wall 25 adjacent to each other, and area of the first side wall 24 is larger than area of the second side wall 25, and a laying region 331 of the pipe 33 on the first side wall 24 is symmetrically distributed.

The cross-sectional region shown in FIG. 6 represents the laying region 331 of the pipe 33 on the first side wall 24. The cross-sectional line is used solely to illustrate the laying region 331, and it does not represent the sectional structure. Moreover, this cross-sectional line graphic does not exist in the specific structure of the pipe 33.

As shown in FIG. 4, the pipe 33 can take the form of two layers, wound in a serpentine horizontal reciprocating pattern on the side walls of the battery cell 20. On the first side wall 24, the laying regions 331 of the two layers of the pipe 33 are symmetrically distributed.

It can be understood that the pipe 33 can also be in the form of a single layer or multiple layers, wound horizontally or vertically on the side walls of the battery cell 20. The laying region 331 of the pipe 33 on the first side wall 24 of the battery cell 20 is itself mirror-symmetric.

For a rectangular-shaped battery cell 20, it has a first side wall 24 and a second side wall 25 that are adjacent to each other. Since the first side wall 24 has a larger surface area, when the battery cell 20 swells and bulges, the degree of bulging is greatest on the first side wall 24. Distributing the laying region 331 of the pipe 33 symmetrically on the first side wall 24 ensures even distribution of the force applied by the pipe 33 on the first side wall 24, thereby ensuring the stability of the overall structure of the battery 100.

Still referring to FIG. 6, according to some embodiments of this application, the laying region 331 of the pipe 33 on the first side wall 24 includes a plurality of portions, and the plurality of portions of the laying region 331 are located on two sides of a center line 241 of the first side wall 24.

The center line 241 in FIG. 6 is used only to indicate the position of the center line of the first side wall 24 and this center line 241 structure does not exist in the specific structure.

When the battery cell 20 swells and bulges, the degree of bulging is greatest in the central region of the first side wall 24. With the laying region 331 of the pipe 33 on the first side wall 24 divided into a plurality of portions, and the plurality of laying portions 331 distributed on two sides of the center line 241 of the first side wall 24, the force distribution of the pipe 33 on the first side wall 24 is kept uniform. This arrangement leaves the central region of the first side wall 24 empty, avoiding the structural stability of the battery 100 being affected by excessive interaction forces between the swollen central region of the first side wall 24 and the pipe 33. Additionally, this ensures that the central region of the first side wall 24 has a larger space for swelling.

Refer to FIG. 7. FIG. 7 shows a structure of a battery 100 provided in another embodiment of this application. According to some embodiments of this application, the body portion 31 includes a plurality of air cushions 34 arranged between adjacent battery cells.

As shown in FIG. 7, a gas pipeline 311 is formed in the air cushion 34, and adjustment of the restraining force on the battery cells 20 and the gap between adjacent battery cells 20 can be implemented through increasing or decreasing the pressure in the gas pipeline 311.

Still referring to FIG. 4, according to some embodiments of this application, a pressure sensor 35 is provided in the gas pipeline 311.

As shown in FIG. 4, when the body portion 31 is wound in two layers, and the gas inlet 312 and the gas outlet 313 are respectively disposed at two ends, two pressure sensors 35 may be provided at the gas inlet 312 and the gas outlet 313, respectively. When the two pressure sensors 35 detect equal pressure values, it can be ensured that gas is evenly distributed inside the gas pipeline 311 and pressure is equal everywhere inside the gas pipeline 311. This further ensures equal pre-tension forces applied by the body portion 31 to each battery cell 20, thereby ensuring the stability of the overall structure of the battery 100.

When the gas inlet 312 and the gas outlet 313 of the body portion 31 are one port, the pressure sensor 35 may be provided only at the port; or the pressure sensor 35 may be provided at that port and at the end of the body portion 31.

The pressure sensor 35 is provided in the gas pipeline 311 to monitor the value of pressure in the gas pipeline 311, facilitating the adjustment of the pressure in the gas pipeline 311. This provides appropriate pre-tension force for the battery cells 20 on one hand, and allows for a certain degree of swelling of the battery cells 20 on the other hand.

It should be understood that, in some embodiments, the regulating valve 32 and the pressure sensor 35 can be an integrated automatic valve with a pressure sensor. Through the setting of the pressure values for the integrated automatic valve with a pressure sensor to open or close, when the battery cells 20 swell and cause the pressure in the gas pipeline 311 to increase to the opening threshold, the integrated automatic valve with a pressure sensor automatically opens, releasing the gas inside the gas pipeline 311; and when the pressure in the gas pipeline 311 decreases to the closing threshold, the integrated automatic valve with a pressure sensor automatically closes, thereby ensuring the provision of appropriate pre-tension forces for the battery cell 20.

According to another aspect of an embodiment of this application, an electric apparatus is further provided, including the battery 100 according to any one of the foregoing embodiment.

The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

In conclusion, it should be noted that the above examples are merely intended for describing the technical solutions of this application but not for limiting this application. Although this application is described in detail with reference to the foregoing examples, persons of ordinary skill in the art should understand that they may still make modifications to the technical solutions described in the foregoing examples or make equivalent replacements to some or all technical features thereof without departing from the scope of the technical solutions of the examples of this application. They should all be covered in the scope of claims and summary in this application. In particular, as long as there is no structural conflict, the various technical features mentioned in the embodiments can be combined in any manner. The present invention is not limited to the specific embodiments disclosed in this specification, but includes all technical solutions falling within the scope of the claims.

## Claims

1. A battery, comprising:
a plurality of arranged battery cells; and
a pressure regulating apparatus, comprising a body portion and a regulating valve, wherein the body portion is arranged between adjacent battery cells, a gas pipeline being formed in the body portion, and the regulating valve is arranged in the gas pipeline and configured to regulate pressure in the gas pipeline so as to adjust a gap between adjacent battery cells.

2. The battery according to claim 1, wherein the regulating valve comprises a pressure booster valve, and the pressure booster valve is configured to connect to a gas source device to increase the pressure in the gas pipeline when the pressure booster valve is actuated.

3. The battery according to claim 1 or 2, wherein an inert gas circulates in the gas pipeline.

4. The battery according to claim 3, wherein a weak layer is provided on the body portion at a position corresponding to the gas pipeline, and when broken, the weak layer is used for the inert gas to flow out.

5. The battery according to any one of claims 1 to 4, wherein the regulating valve comprises a pressure relief valve, wherein the pressure relief valve is configured to reduce the pressure in the gas pipeline when actuated.

6. The battery according to any one of claims 1 to 5, wherein the body portion comprises a pipe wound between a plurality of adj acent battery cells.

7. The battery according to claim 6, wherein the pipe is wound on a side wall of the battery cell, and the side wall of the battery cell comprises a first side wall and a second side wall adjacent to each other, and an area of the first side wall is larger than an area of the second side wall, and a laying region of the pipe on the first side wall is symmetrically distributed.

8. The battery according to claim 7, wherein the laying region of the pipe on the first side wall comprises a plurality of portions, and the plurality of portions of the laying region are located on two sides of a center line of the first side wall.

9. The battery according to any one of claims 1 to 8, wherein the body portion comprises a plurality of air cushions arranged between adjacent battery cells.

10. The battery according to any one of claims 1 to 9, wherein a pressure sensor is provided in the gas pipeline.

11. An electric apparatus, comprising the battery according to any one of claims 1 to 10.
